(19) Europäisches Patentamt
European Patent Office
Office européen des brevets

(11) EP 4 538 061 A1

(12) **EUROPEAN PATENT APPLICATION**
published in accordance with Art. 153(4) EPC

(43) Date of publication:
**16.04.2025 Bulletin 2025/16**

(21) Application number: **23826805.6**

(22) Date of filing: **27.04.2023**

(51) International Patent Classification (IPC):
***B60C 11/00*** *(2006.01)* ***B60C 1/00*** *(2006.01)*
***B60C 3/04*** *(2006.01)* ***B60C 11/03*** *(2006.01)*
***C08F 236/10*** *(2006.01)* ***C08K 3/36*** *(2006.01)*
***C08L 9/06*** *(2006.01)*

(52) Cooperative Patent Classification (CPC):
**B60C 1/00; B60C 3/04; B60C 11/00; B60C 11/03; C08F 236/10; C08K 3/36; C08L 9/06;** Y02T 10/86

(86) International application number:
**PCT/JP2023/016625**

(87) International publication number:
**WO 2023/248616 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.06.2022 JP 2022101526**

(71) Applicant: **SUMITOMO RUBBER INDUSTRIES, LTD.**
**Kobe-shi, Hyogo 651-0072 (JP)**

(72) Inventors:
- **SUZUKI Yumi**
  **Kobe-shi, Hyogo 651-0072 (JP)**
- **NAKAMURA Kentaro**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **TIRE**

(57) The present invention addresses the problem of improving the wear resistance performance of a tire during high-speed driving. This tire comprises a tread portion, wherein: a cap rubber layer that forms the tread portion contains, in 100 parts by mass of a rubber component, at least 80 parts by mass of styrene-butadiene rubber (SBR) with a styrene content of at most 25 % by mass, contains at most 100 parts by mass of silica with respect to 100 parts by mass of the rubber component, and is formed from a rubber composition which makes the cap rubber layer have a complex elastic modulus (30 °CE*) of at most 8.0 MPa as measured under the conditions of a temperature of 30 °C, a frequency of 10 Hz, an initial strain of 5%, a dynamic strain rate of 1%, and a deformation mode of tension; and the thickness of the tread portion is

EP 4 538 061 A1

## Description

[TECHNICAL FIELD]

The present invention relates to a tire.

[BACKGROUND ART]

In tires installed on a vehicle, the tread portion that comes into contact with the ground wears as the vehicle runs, and when the wear limit is exceeded, the risk of an accident increases. For this reason, various techniques have been proposed for improving wear resistance (for example, Patent Documents 1 to 4).

[PRIOR ART DOCUMENTS]

[PATENT DOCUMENT]

[Patent Document 1] JP 2018-135412 A
[Patent Document 2] JP 2018-135500 A
[Patent Document 3] JP 2019-182982 A
[Patent Document 4] JP 2021-088676 A

[SUMMARY OF INVENTION]

[PROBLEM TO BE SOLVED BY THE INVENTION]

However, with the construction of expressways in recent years, opportunities for traveling long distances at high speeds have increased dramatically. Under these circumstances, it cannot be said that the wear resistance of tires manufactured based on the above-mentioned conventional techniques during high-speed running is still sufficient, and further improvement is strongly desired.

Therefore, an object of the present invention is to improve the wear resistance of tires during high-speed running.

[MEANS FOR SOLVING THE PROBLEM]

The present invention is

a tire having a tread portion, wherein
a cap rubber layer forming the tread portion contains
a styrene-butadiene rubber (SBR) having a styrene content of 25% by mass or less in an amount of 80 parts by mass or more in 100 parts by mass of the rubber component, and
silica in an amount of 100 parts by mass or less relative to 100 parts by mass of the rubber component; and
is formed from a rubber composition which has the complex elastic modulus being measured at a temperature of 30°C, a frequency of 10 Hz, an initial strain of 5%, a dynamic strain rate of 1%, and a deformation mode of tension (30°C E*) of 8.0 MPa or less; and
the thickness of the tread portion is 9.0 mm or less.

[THE EFFECT OF THE INVENTION]

According to the present invention, it is possible to improve the wear resistance of a tire during high-speed running.

[EMBODIMENTS FOR CARRYING OUT THE INVENTION]

[1] Characteristics of the tire according to the present invention

First, the characteristics of the tire according to the present invention will be described.

1. Overview

The tire according to the present invention comprises a carcass that is bridged between one of a pair of bead portions that are engaged with a rim and serves as the skeleton of the tire, a belt layer that is provided radially outward of the carcass, a belt reinforcing layer that is provided radially outward of the belt layer, and a tread portion that is provided radially outward of these layers. The tread portion comprises a cap rubber layer that is provided radially outward of the tire and serves as a ground contact surface, and if necessary, a base rubber layer that is provided radially inward of the cap rubber layer.

The cap rubber layer forming the tread portion is formed from a rubber composition containing 80 parts by mass or more of SBR having a styrene content of 25% by mass or less in 100 parts by mass of the rubber component, and 100 parts by mass or less of silica relative to 100 parts by mass of the rubber component. This rubber composition has a complex modulus of elasticity (30°CE*) of 8.0 MPa or less of the cap rubber layer measured at a temperature of 30°C, a frequency of 10 Hz, an initial strain of 5%, a dynamic strain rate of 1%, and a deformation mode of tension. The thickness of the tread portion is 9.0 mm or less.

The cap rubber layer referred to here is not limited to the rubber layer that forms the outermost layer of the tread portion, and in the case where there are two or more layers within 5 mm from the tread surface toward the inside, at least one of the layers must satisfy the requirements of the rubber composition.

These characteristics can improve the wear resistance of the tire when it is running at high speeds, as described below.

2. Mechanism of the effect of the tire according to the present invention

The mechanism by which the above-mentioned effects are exhibited in the tire according to the present invention is considered as follows.

As described above, the cap rubber layer of the tire according to the present invention is formed from a rubber composition containing 80 parts by mass or more of SBR having a styrene content of 25 % by mass or less in 100 parts by mass of the rubber component, and 100 parts by mass or less of silica relative to 100 parts by mass of the rubber component.

SBR having a low styrene content, specifically, 25 % by mass or less, has a low glass transition temperature (Tg). Therefore, by including 80 parts by mass or more in 100 parts by mass of the rubber component and forming majority of the cap rubber layer, the Tg of the entire rubber composition can be lowered, the mobility of the polymer can be increased, and the softness of the rubber can be maintained. This improves the road surface conformance, suppresses the occurrence of slipping, and improves wear resistance during high-speed running.

In addition, the small amount of styrene in the SBR forms minute styrene domains in the rubber matrix, which makes it easier to reduce the shear force generated between the tread and the road surface. In addition, the styrene portions can increase the modulus of the tread against large deformation, improving the wear resistance during high-speed running.

In the cap rubber layer of the tire according to the present invention, the content of silica is 100 parts by mass or less relative to 100 parts by mass of the rubber component, which is an amount that does not exceed amount of the rubber component. This makes it easier for the silica to be uniformly dispersed in the rubber matrix, the rubber composition is homogenized, the road surface conformance is improved, and the wear resistance during high-speed running can be improved. In addition, since a silica network is easily formed in the rubber matrix, the rubber can be sufficiently reinforced, and the wear resistance during high-speed running can be improved.

In the present invention, the complex modulus of elasticity (30°C E*) of the rubber composition forming the cap rubber layer, measured at a temperature of 30°C, a frequency of 10 Hz, an initial strain of 5%, a dynamic strain rate of 1%, and a deformation mode of tension, is 8.0 MPa or less.

The complex modulus of elasticity is a parameter that indicates the rigidity of a rubber layer. By setting the 30°CE* to be 8.0 MPa or less, the entire rubber becomes soft. Therefore, from a macroscopic viewpoint, it is possible to provide sufficient road surface conformance, suppress the occurrence of slippage with the road surface, and improve the wear resistance during high-speed running.

Furthermore, in the tire according to the present invention, the thickness of the tread portion is thinned to 9.0 mm or less. This suppresses the plasticization of the rubber that occurs with the temperature rise of the rubber due to the accumulation of heat generated between the tread portion and the road surface, and sufficiently suppresses the decrease in strength of the rubber, thereby improving the wear resistance during high-speed running. In addition, the degree of deformation applied to the rubber can be reduced, thereby improving the wear resistance during high-speed running.

As described above, in the tire according to the present invention, it is considered that the effect of improving road surface conformance, the effect of reducing shear forces generated between the tread portion and the road surface, the effect of improving the modulus of the rubber, the effect of reinforcing the rubber, the effect of suppressing the occurrence of

slippage with the road surface, from a macro perspective, and the effect of suppressing a decrease in the strength of the rubber all work together to provide sufficiently improved wear resistance during high-speed running.

In the present invention, the styrene content is more preferably 20% by mass or less, and further preferably 15% by mass or less, while the lower limit is preferably 3% by mass or more, more preferably 5% by mass or more, and further preferably 8% by mass or more.

The phrase "containing 80 parts by mass or more of SBR having a styrene content of 25% by mass or less in 100 parts by mass of the rubber component" means that the amount of SBR per 100 parts by mass of the rubber component is 80 parts by mass or more, and the amount of styrene in the entire SBR is 25% by mass or less.

In other words, when the rubber component contains only one styrene-containing polymer (SBR), it indicates that the styrene amount is 25 % by mass or less, and when the rubber component contains multiple styrene-containing polymers (SBR), it indicates that the styrene amount calculated by the sum of the product of the styrene amount (% by mass) in each polymer and the mixing amount (parts by mass) of that polymer per 100 parts by mass of the rubber component is 25 % by mass or less.

More specifically, when 100 parts by mass of the rubber component contains SBR1 (X1 parts by mass) having a styrene amount S1% by mass and SBR2 (X2 parts by mass) having a styrene amount S2% by mass, the amount of styrene is calculated from the formula $\{(S1 \times X1)+(S2 \times X2)\}/(X1+X2)$ is 25% by mass or less.

In addition, in the rubber composition after vulcanization, the content of styrene can also be calculated by determining the content of styrene contained in the rubber component after acetone extraction using solid-state nuclear magnetic resonance (solid-state NMR) or a Fourier transform infrared spectrophotometer (FTIR).

In the present invention, the content of SBR in 100 parts by mass of the rubber component is more preferably 85 parts by mass or more, and further preferably 90 parts by mass or more.

The content of silica is more preferably 98 parts by mass or less relative to 100 parts by mass of the rubber component.

In the present invention, the 30°C E* is more preferably 7.6 MPa or less, further preferably 7.5 MPa or less, further preferably 7.4 MPa or less, further preferably 7.3 MPa or less, further preferably 7.0 MPa or less, and further preferably 6.8 MPa or less. The lower limit is not particularly limited, but is preferably 5.0 MPa or more, more preferably 5.5 MPa or more, and further preferably 6.0 MPa or more.

Here, the "complex elastic modulus" can be measured using a viscoelasticity measuring device such as "Eplexor (registered trademark)" manufactured by GABO Corporation.

Furthermore, in the present invention, the thickness of the tread portion is more preferably 8.5 mm or less. The lower limit is preferably 7.5 mm or more, and more preferably 8.0 mm or more.

Here, the "thickness of the tread portion" refers to the thickness of the tread portion on the tire equatorial plane in the tire radial cross section. When the tread portion is formed of a single rubber composition, it is the thickness of the rubber composition. When the tread portion is formed of a stacked structure of a plurality of rubber compositions described later, it is the total thickness of these layers. When the tire has grooves on the tire equatorial plane, it refers to the thickness from the intersection of a straight line connecting the outermost end points of the grooves in the tire radial direction and the tire equatorial plane to the innermost interface of the tread portion in the tire radial direction. The tread portion is a member of the region that forms the ground contact surface of the tire, and refers to the portion of the tire radial direction outside the members containing fiber materials such as the carcass, belt layer, and belt reinforcing layer. The thickness of the tread portion can be measured by adjusting the bead portion to the standardized rim width in a cross section cut out in the radial direction of the tire.

In the above, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK ". Reference is made in the order of JATMA, ETRTO, and TRA, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

[2] More preferred embodiments of the tire according to the present invention

The tire according to the present invention can achieve even greater effects by adopting the following aspects.

1. Loss tangent (tan δ) of the cap rubber layer

The loss tangent tan δ is a viscoelastic parameter that indicates the energy absorption performance. The larger

the value, the more energy can be absorbed and converted into heat. There is concern it may lead to heat generation in the rubber, which may cause deformation and reduce abrasion resistance.

For this reason, in the present invention, the loss tangent (30°C tan δ) of the rubber composition forming the cap rubber layer, measured in a deformation mode: tension under the conditions of a temperature of 30°C, a frequency of 10 Hz, an initial strain of 5%, and a dynamic strain rate of 1%, is preferably 0.26 or less, more preferably 0.25 or less, further preferably 0.23 or less, further preferably 0.21 or less, and further preferably 0.20 or less. The lower limit is not particularly limited, but is preferably 0.15 or more, more preferably 0.17 or more, and further preferably 0.19 or more.

In this way, by setting an upper limit of 0.25 for 30°C tan δ near room temperature, heat generation in the tread portion can be suppressed, and it is considered that deformation of the rubber can be suppressed even during high-speed running, thereby improving wear resistance.

In the above, the loss tangent (tan δ) can be measured using a viscoelasticity measuring device such as "Eplexor (registered trademark)" manufactured by GABO Corporation.

2. Modulus of the cap rubber layer

When tires are in contact with the road surface, they deform as they run. When the amount of deformation becomes large, such as when running at high speeds, the rubber can wear down and tear due to the friction, which may lead to a deterioration in wear resistance.

As a result of investigation to prevent the occurrence of such problems, the inventors of the present invention have concluded that, when the modulus at 100% elongation (M100) of the cap rubber layer at 23°C is 2.3 MPa or more, more preferably 2.4 MPa or more, further preferably 2.5 MPa or more, further preferably 2.6 MPa or more, and further preferably 2.7 MPa or more, the rubber will not easily tear even if the deformation amount increases, and abrasion resistance during high-speed running can be improved. The upper limit of M100 is preferably 3.0 MPa or less, and more preferably 2.8 MPa or less.

3. Isoprene rubber content

In the present invention, the rubber component of the rubber composition forming the cap rubber layer preferably contains an isoprene-based rubber, which provides higher reinforcing properties and can further improve the wear resistance during high-speed running.

The content of the isoprene-based rubber in 100 parts by mass of the rubber component is preferably 1 part by mass or more and 9 parts by mass or less, and more preferably 3 parts by mass or more and 7 parts by mass or less.

4. Multi-layered tread

In the present invention, the tread portion may be formed of only one layer of the cap rubber layer, or may be formed of two layers by providing a base rubber layer inside the cap rubber layer, or may be formed of three layers, or may be formed of four layers or more. In this case, the thickness of the cap rubber layer in the entire tread portion is preferably 10% or more. This suppresses slippage between the tread portion surface and the road surface even during high-speed running, thereby further improving wear resistance. The thickness is more preferably 70% or more.

As described above, in the case of a stacked structure of a plurality of rubber compositions, the "thickness of the tread portion" refers to the total thickness of the stacked layers. In the case of a tire having grooves on the equatorial plane of the tire, the "thickness of the tread portion" refers to the thickness from the intersection of a straight line connecting the outermost end points of the grooves in the radial direction of the tire with the equatorial plane of the tire to the innermost interface of the tread portion in the radial direction of the tire.

In this case, it is preferable that the 30°C E* and 30°C tan δ of the base rubber layer are smaller than the 30°C E* and 30°C tan δ of the cap rubber layer.

5. Particle size of silica contained in the cap rubber layer

In the present invention, the particle size (average primary particle size) of the silica contained in the cap rubber layer is preferably 17 nm or less from the viewpoint of improving reinforcing properties.

The average primary particle diameter can be calculated by directly observing silica particles extracted from a rubber composition cut out from a tire using a transmission electron microscope (TEM) or the like, calculating the equivalent cross-sectional area diameter from the area of each silica particle obtained, and calculating the average value.

6. Acetone extractables (AE) of the cap rubber layer

In the present invention, the acetone extractables (AE) of the cap rubber layer is preferably 15.1% by mass or more, more preferably 16% by mass or more, further preferably 18% by mass or more, further preferably 18.1% by mass or more, further preferably 19.4% by mass or more, and further preferably 20% by mass or more. On the other hand, although there is no particular upper limit, it is preferably 24% by mass or less, more preferably 23% by mass or less, further preferably 22% by mass or less, and further preferably 21.3% by mass or less.

The acetone extractables (AE) can be considered as an index showing the amount of softeners in the rubber composition, and can also be considered as an index showing the softness of the rubber composition. Therefore, by controlling the AE amount in the cap rubber layer as described above, the cap rubber layer can be appropriately deformed and can be more flexibly grounded on the road surface, and thus the wear resistance during high-speed running can be further improved.

The acetone extractables (AE) can be measured in accordance with JIS K 6229: 2015. Specifically, the AE (% by mass) can be obtained by immersing a vulcanized rubber test piece cut out from the measurement site in acetone for a predetermined time and determining the mass loss rate (%) of the test piece.

More specifically, each vulcanized rubber test piece is immersed in acetone for 72 hours at room temperature and normal pressure to extract the soluble components, the mass of each test piece before and after extraction is measured, and the AE can be calculated according to the following formula.

Acetone extractables (%) = {(mass of rubber test piece before extraction - mass of rubber test piece after extraction)} $\times$ 100

The acetone extractable content can be appropriately changed by changing the compounding ratio of the plasticizer in the rubber composition.

7. Land Ratio

In the tire according to the present invention, it is preferable that the land ratio in the tread portion of the tire installed on a standardized rim and with a standardized internal pressure is 40% or more.

The "land ratio" is the ratio of the actual contact area to the virtual contact area where all the grooves on the surface of the tread are filled. By setting the land ratio at 40% or more, the contact area with the road surface becomes large, so that wear resistance performance during high-speed running can be stably obtained. On the other hand, it is preferable to set the land ratio at 95% or less. This allows sand and soil to be sufficiently taken into the grooves of the tread.

In addition, the product of the content (parts by mass) of styrene butadiene rubber (SBR) having a styrene content of 25% by mass or less in 100 parts by mass of the rubber component and the land ratio (%) in the tread portion is preferably 9000 or less, more preferably 8500 or less, and further preferably 7000 or less. The lower limit is not particularly limited, but is, for example, 4000 or more. This allows the effect of the network of styrene domains to work together, thereby further improving the wear resistance during high-speed running.

The land ratio can be determined from the ground contact shape under standardized rim, standardized internal pressure, and standardized load conditions.

Specifically, the tire is mounted on a standardized rim, the standardized internal pressure is applied, and the tire is left at rest for 24 hours at 25°C. Then, the tire tread surface is painted with ink, and the standardized load is applied and pressed against cardboard (camber angle is 0°), and the contact shape is transferred to the cardboard. The tire is rotated 72° in the circumferential direction and the contact shape is transferred at five places. That is, the contact shape is obtained five times. At this time, the parts of the five contact shapes that are interrupted by the grooves in the contour of the contact shape are smoothly connected, and the obtained shape is called the virtual contact surface.

The land ratio can be calculated by (average area of five contact shapes (black portions) transferred to cardboard / average area of virtual contact surfaces obtained from the five contact shapes) $\times$100(%).

The "standardized internal pressure" refers to the air pressure specified for each tire by the above standard, and in the case of JATMA, it refers to the maximum air pressure, in the case of ETRTO, it refers to the "INFLATION PRESSURE" table, and in the case of TRA, it refers to the maximum value listed in the table "TIRE LOAD LIMITS AT VARIOUS COLD INFLATION PRESSURES". As in the case of "standardized rim", it refers to JATMA, ETRTO, TRA in that order and follows the standards. In the case of a tire not specified in the standard, it refers to the standardized internal pressure (250 KPa or more) of another tire size (specified in the standard) that is specified with the standardized rim as the standard rim. In the case where multiple standardized internal pressures of 250 KPa or more are specified, it refers to the minimum value among them.

The "standardized load" is the load determined for each tire by each standard in the standard system including

the standard on which the tire is based, and refers to the maximum mass that can be loaded on the tire. In the case of JATMA, it refers to the maximum load capacity, in the case of ETRTO, it refers to the "LOAD CAPACITY", and in the case of TRA, it refers to the maximum value described in the table "TIRE LOAD LIMITS AT VARIOUS COLD INFLATION PRESSURES". As in the case of the "standardized rim" and "standardized internal pressure" described above, JATMA, ETRTO, and TRA are referred to in that order and their standards are followed. In the case of a tire not determined by a standard, the standardized load $W_L$ is calculated as follows.

$$V = \{(Dt/2)^2 - (Dt/2-Ht)^2\} \times \pi \times Wt$$

$$W_L = 0.000011 \times V + 175$$

$W_L$: Standardized load (kg)
V: Virtual volume of the tire ($mm^3$)
Dt: Tire outer diameter Dt (mm)
Ht: Tire section height (mm)
Wt: Tire section width (mm)

8. Aspect ratio

The aspect ratio indicates the ratio of the section height to the section width of the tire, and the smaller this ratio is, the larger the ground contact area can be secured, and the more sand and soil can be taken in and discharged from the tread portion, thereby improving the wear resistance during high-speed running. In the present invention, the specific aspect ratio is preferably 80% or less.

The product of the content (parts by mass) of silica relative to 100 parts by mass of the rubber component and the aspect ratio (%) is preferably 7500 or less, more preferably 7000 or less, further preferably 6500 or less, and further preferably 4410 or less. The lower limit is not particularly limited, but is, for example, 1000 or more. This allows the effect of the silica network to work together, and the wear resistance during high-speed running can be further improved.

The above aspect ratio (%) can be calculated by the following formula using the tire cross-sectional height Ht (mm), cross-sectional width Wt (mm), tire outer diameter Dt (mm) when the internal pressure is 250 kPa, and rim diameter R (mm).

$$\text{Aspect ratio (\%)} = (Ht / Wt) \times 100 \ (\%)$$

$$Ht = (Dt - R) / 2$$

[3] Embodiments

Hereinafter, the present invention will be described in detail based on the embodiments.

1. Rubber composition

In the tire according to the present invention, the rubber composition forming the cap rubber layer can be obtained by appropriately adjusting the types and amounts of various compounding materials such as the rubber components, fillers, plasticizers, vulcanizing agents and vulcanization accelerators described below.

(1) Mixture of ingredients

(a) Rubber component

The rubber component is not particularly limited, and rubbers (polymers) that are generally used in tire production can be used, such as isoprene-based rubber, diene-based rubbers such as butadiene rubber (BR), styrene-butadiene rubber (SBR), and nitrile rubber (NBR), butyl-based rubbers such as butyl rubber, and thermoplastic elastomers such as styrene-butadiene-styrene block copolymer (SBS) and styrene-butadiene block copolymer (SB).

In the present invention, among these, from the viewpoint of including styrene in the rubber component, it is preferable to include any one of styrene-based polymers such as SBR, SBS, and SB, and to include SBR. Furthermore,

these styrene-based polymers may be used in combination with other rubber components, and for example, a combination of SBR and BR, or a combination of SBR, BR, and isoprene-based rubber is preferable.

(i) SBR

The weight average molecular weight of the SBR is, for example, more than 100,000 and less than 2,000,000. In the present invention, as described above, the amount of styrene in the SBR component is 25% by mass or less. The vinyl content (1,2-bonded butadiene content) of the SBR is, for example, more than 5% by mass and less than 70% by mass. The vinyl content of the SBR refers to the 1,2-bonded butadiene content relative to the total butadiene portion in the SBR component. The structure of the SBR can be identified using, for example, a JNM-ECA series device manufactured by JEOL Ltd (measurement of the styrene amount and vinyl content).

In the present invention, the content of SBR in 100 parts by mass of the rubber component is, as described above, 80 parts by mass or more, more preferably 85 parts by mass or more, and further preferably 90 parts by mass or more.

There are no particular limit on the SBR, and for example, emulsion-polymerized styrene-butadiene rubber (E-SBR), solution-polymerized styrene-butadiene rubber (S-SBR), and the like can be used. The SBR may be either unmodified SBR or modified SBR. In addition, hydrogenated SBR obtained by hydrogenating the butadiene portion of SBR may be used. The hydrogenated SBR may be obtained by subsequently hydrogenating the BR portion of SBR, or a similar structure may be obtained by copolymerizing styrene, ethylene, and butadiene.

The modified SBR may be any SBR having a functional group that interacts with a filler such as silica, and examples thereof include terminal-modified SBR in which at least one end of the SBR has been modified with a compound (modifying agent) having the functional group (terminal-modified SBR having the functional group at the end), main-chain-modified SBR having the functional group in the main chain, main-chain terminal-modified SBR having the functional group in the main chain and at least one end (for example, SBR having the functional group in the main chain and at least one end modified with the modifying agent), and terminal-modified SBR modified (coupled) with a polyfunctional compound having two or more epoxy groups in the molecule and having a hydroxyl group or epoxy group introduced therein.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, an epoxy group, and the like. These functional groups may have a substituent.

As the modified SBR, for example, SBR modified with a compound (modifying agent) represented by the following formula can be used.

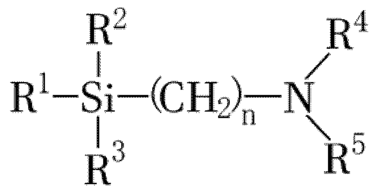

In the formula, $R^1$, $R^2$ and $R^3$ are the same or different and represent an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be bonded to form a ring structure together with the nitrogen atom. "n" represents an integer.

As the modified SBR modified with a compound (modifying agent) represented by the above formula, SBR in which the polymerization terminals (active terminals) of solution-polymerized styrene-butadiene rubber (S-SBR) have been modified with a compound represented by the above formula (such as the modified SBR described in JP-A-2010-111753).

$R^1$, $R^2$ and $R^3$ are preferably alkoxy groups (preferably alkoxy groups having 1 to 8 carbon atoms, more preferably alkoxy groups having 1 to 4 carbon atoms). $R^4$ and $R^5$ are preferably alkyl groups (preferably alkyl groups having 1 to 3 carbon atoms). "n" is preferably 1 to 5, more preferably 2 to 4, and further preferably 3. When $R^4$ and $R^5$ are combined to form a ring structure together with the nitrogen atom, it is preferably a 4- to 8-membered ring. The alkoxy group also includes cycloalkoxy groups (cyclohexyloxy group, and the like) and aryloxy groups (phenoxy group, benzyloxy group, and the like).

Specific examples of the modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more kinds.

As the modified SBR, a modified SBR modified with the following compounds (modifying agents) may also be used. Examples of the modifying agents include

polyglycidyl ethers of polyhydric alcohols such as ethylene glycol diglycidyl ether, glycerin triglycidyl ether, trimethylolethane triglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4'-diglycidyl-diphenylmethylamine and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidyl metaxylenediamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis-(1-methylpropyl) carbamic acid chloride, 4-morpholinecarbonyl chloride, 1-pyrrolidinecarbonyl chloride, N,N-dimethylcarbamic acid chloride, and N,N-diethylcarbamic acid chloride;
epoxy group-containing silane compounds such as 1,3-bis-(glycidyloxypropyl)-tetramethyldisiloxane, and (3-glycidyloxypropyl)-pentamethyldisiloxane;
sulfide group-containing silane compounds such as (trimethylsilyl)[3-(trimethoxysilyl)propyl]sulfide, (trimethylsilyl)[3-(triethoxysilyl)propyl]sulfide, (trimethylsilyl) [3-(tripropoxysilyl)propyl]sulfide, (trimethylsilyl)[3-(tributoxysilyl)propyl] sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;
N-substituted aziridine compounds such as ethyleneimine and propyleneimine; alkoxysilane such as methyltriethoxysilane, N,N-bis(trimethylsilyl)-3-aminopropyltrimethoxysilane, N,N-bis(trimethylsilyl)-3-aminoethyltriethoxysilane, N,N-bis(trimethylsilyl)aminoethyltrimethoxysilane, and N,N-bis(trimethylsilyl)aminoethyltriethoxysilane;
(thio)benzophenone compounds having an amino group and/or a substituted amino group, such as 4-N,N-dimethylaminobenzophenone, 4-N,N-di-t-butylaminobenzophenone, 4-N,N-diphenylaminobenzophenone, 4,4'-N,N-bis(dimethylamino)benzophenone, 4,4'-bis(diethylamino)benzophenone, 4,4'-bis(diphenylamino)benzophenone, and N,N,N',N'-bis-(tetraethylamino)benzophenone;
benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones, such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N-substituted piperidones, such as N-methyl-2-piperidone, N-vinyl-2-piperidone, and N-phenyl-2-piperidone;
lactams such as N-methyl-ε-caprolactam, N-phenyl-ε-caprolactam, N-methyl-ω-laurylolactam, N-vinyl-ω-laurylolactam, N-methyl-β-propiolactam, and N-phenyl-β-propiolactam;
as well as N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethylurea, 1,3-dimethylethyleneurea, 1,3-divinylethyleneurea, 1,3-diethyl-2-imidazolidinone, 1-methyl-3-ethyl-2-imidazolidinone, 4-N,N-dimethylaminoacetophene, 4-N,N-diethylaminoacetophenone, 1,3-bis(diphenylamino)-2-propanone, 1,7-bis(methylethylamino)-4-heptanone, and the like. The modification with the compound (modifying agent) can be carried out by a known method.

As the SBR, for example, SBR manufactured and sold by Sumitomo Chemical Co., Ltd., ENEOS Material Corporation, Asahi Kasei Corporation, Zeon Corporation, etc. may be used. The SBR may be used alone or in combination of two or more kinds.

(ii) BR

In the present invention, the rubber composition may contain BR as necessary. In this case, the content of BR in 100 parts by mass of the rubber component is preferably 10 parts by mass or more, more preferably 13 parts by mass or more, and is preferably 20 parts by mass or less, more preferably less than 17 parts by mass.

The weight average molecular weight of the BR is, for example, more than 100,000 and less than 2,000,000. The vinyl content of the BR is, for example, more than 1 % by mass and less than 30 % by mass. The cis content of the BR is, for example, more than 1 % by mass and less than 98 % by mass. The trans content of the BR is, for example, more than 1 % by mass and less than 60 % by mass.

The BR is not particularly limited, and may be a BR with a high cis content (cis content of 90% or more), a BR with a low cis content, or a BR containing syndiotactic polybutadiene crystals. The BR may be either unmodified or modified, and the modified BR may be modified BR having the above-mentioned functional group introduced therein. These may be used alone or in combination of two or more. The cis content can be measured by infrared absorption spectroscopy.

As the BR, for example, products of Ube Industries, Ltd., ENEOS Materials Corporation, Asahi Kasei Corporation, Zeon Corporation, etc. can be used.

(iii) Isoprene rubber

In the present invention, the rubber composition may contain an isoprene-based rubber as necessary. In this case, the content of the isoprene-based rubber in 100 parts by mass of the rubber component is preferably 3 parts by mass or more, more preferably 5 parts by mass or more, and is preferably 20 parts by mass or less, more preferably less than 10 parts by mass.

Examples of isoprene-based rubber include natural rubber (NR), isoprene rubber (IR), reformed NR, modified NR, and modified IR.

As the NR, for example, SIR20, RSS#3, TSR20, SVR-L, etc., which are common in the tire industry, can be used. As the IR, there is no particular limitation, and for example, IR2200, etc., which are common in the tire industry can be used. As the reformed NR, deproteinized natural rubber (DPNR), high-purity natural rubber (UPNR), and the like, as the modified NR, epoxidized natural rubber (ENR), hydrogenated natural rubber (HNR), grafted natural rubber, and the like, and as the modified IR, epoxidized isoprene rubber, hydrogenated isoprene rubber, grafted isoprene rubber, and the like can be mentioned. These may be used alone or in combination of two or more kinds.

(iv) Other rubber components

Further, as other rubber components, rubbers (polymers) that are generally used in the manufacture of tires, such as nitrile rubber (NBR), may be contained.

(b) Compounding materials other than rubber components

(i) Filler

In the present invention, the rubber composition contains silica as a filler as described above, but may contain other fillers. Specific examples of fillers other than silica include carbon black, graphite, calcium carbonate, talc, alumina, clay, aluminum hydroxide, and mica.

(i-1) Silica

In the present invention, the content of silica is, as described above, 100 parts by mass or less, and more preferably 98 parts by mass or less, relative to 100 parts by mass of the rubber component. The lower limit is preferably 85 parts by mass or more, more preferably 90 parts by mass or more, and further preferably 95 parts by mass or more.

In the present invention, the BET specific surface area of the silica contained in the rubber composition is preferably more than 140 $m^2/g$ from the viewpoint of obtaining good durability performance, more preferably more than 160 $m^2/g$, and further preferably more than 180 $m^2/g$ of finely divided silica. On the other hand, from the viewpoint of obtaining good rolling resistance during high-speed running, it is preferably less than 300 $m^2/g$. The BET specific surface area is the value of $N_2$ SA measured by the BET method in accordance with ASTM D3037-93.

In the present invention, as described above, it is preferable to use silica having a particle size of 17 nm or less for the rubber composition forming the outer cap rubber layer, and by using silica having a small particle size, the frequency of contact with the polymer (styrene domain) can be increased, thereby improving the reinforcing property. The lower limit is not particularly limited, but 10 nm or more is preferable from the viewpoint of dispersibility during mixing.

Examples of silica include dry silica (anhydrous silica) and wet silica (hydrated silica). Among them, wet silica is preferred because it has a large number of silanol groups. In addition, silica made from hydrated glass or silica made from biomass materials such as rice husk may also be used.

As the silica, for example, products available from Evonik Industries, Rhodia Corporation, Tosoh Silica Co. Ltd., Solvay Japan Co. Ltd., Tokuyama Co. Ltd., etc. can be used.

(i-2) Silane coupling agent

The rubber composition forming the cap rubber layer of the present invention preferably contains a silane

coupling agent together with silica.

The silane coupling agent is not particularly limited. Examples of the silane coupling agent include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. These may be used alone or in combination of two or more.

As the silane coupling agent, for example, products available from Evonik Industries, Momentive Corporation, Shin-Etsu Silicones Co. Ltd., Tokyo Chemical Industry Co. Ltd., Azumax Co. Ltd., Dow Corning Toray Co. Ltd., etc. can be used.

The content of the silane coupling agent is, for example, more than 3 parts by mass and less than 25 parts by mass relative to 100 parts by mass of silica.

(i-3) Carbon black

In the present invention, the rubber composition preferably contains carbon black from the viewpoint of reinforcement.

The specific content ratio of carbon black relative to 100 parts by mass of the rubber component is preferably more than 5 parts by mass, and more preferably more than 15 parts by mass, while it is preferably less than 30 parts by mass, and more preferably less than 25 parts by mass.

The carbon black is not particularly limited, and examples thereof includes furnace black (furnace carbon black) such as SAF, ISAF, HAF, MAF, FEF, SRF, GPF, APF, FF, CF, SCF and ECF; acetylene black (acetylene carbon black); thermal black (thermal carbon black) such as FT and MT; and channel black (channel carbon black) such as EPC, MPC and CC. These may be used alone or in combination of two or more.

The CTAB specific surface area (Cetyl Tri-methyl Ammonium Bromide) of the carbon black is preferably 130 $m^2/g$ or more, more preferably 160 $m^2/g$ or more, and further preferably 170 $m^2/g$ or more. On the other hand, it is preferably 250 $m^2/g$ or less, and more preferably 200 $m^2/g$ or less. The CTAB specific surface area is a value measured in accordance with ASTM D3765-92.

The specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(i-4) Other fillers

In addition to the above-mentioned silica and carbon black, the rubber composition may further contain, as necessary, fillers commonly used in the tire industry, such as graphite, calcium carbonate, talc, alumina, clay, aluminum hydroxide, mica, etc. The content of these fillers is, for example, more than 0.1 part by mass and less than 200 parts by mass per 100 parts by mass of the rubber component.

(ii) Plasticizer components

The rubber composition may contain oil (including extender oil), liquid rubber, and resin as plasticizer components that soften rubber. The plasticizer components are components that can be extracted from vulcanized rubber with acetone. The total content of the plasticizer components is preferably 45 parts by mass or more, more preferably 55 parts by mass or more, and further preferably 65 parts by mass or more, relative to 100 parts by mass of the rubber component.

On the other hand, it is preferably 80 parts by mass or less, more preferably 75 parts by mass or less, and further preferably 70 parts by mass or less. When the rubber component is an oil-extended rubber component, the amount of the oil-extended oil is included in the oil content.

(ii-1) Oil

Examples of the oil include mineral oil (generally called process oil), vegetable oil, and mixtures thereof. As the mineral oil (process oil), paraffin-based process oils, aromatic process oils, naphthene -based process oils, and the like can be used. Examples of vegetable oils include castor oil, cottonseed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combination of two or more. From the viewpoint of life cycle assessment, waste oils used as lubricants in rubber mixers and automobile engines, waste edible oils, etc. may be used as appropriate.

Specific examples of process oils (mineral oils) include products from Idemitsu Kosan Co., Ltd., Sankyo Yuka Industry Co., Ltd., ENEOS Corporation, Orisoi Corporation, H&R Corporation, Toyokuni Oil Mills Co., Ltd., Showa Shell Sekiyu Co., Ltd., Fuji Kosan Co., Ltd., etc.

(ii-2) Liquid rubber

The liquid rubber mentioned as a plasticizer is a polymer in a liquid state at room temperature (25°C) and is a rubber component that can be extracted by acetone extraction from a vulcanized tire. Examples of the liquid rubber include farnesene-based polymers, liquid diene-based polymers, and hydrogenated products thereof.

The farnesene-based polymer is a polymer obtained by polymerizing farnesene, and has a structural unit based on farnesene. Farnesene includes isomers such as α-farnesene ((3E, 7E) -3,7,11-trimethyl-1,3,6,10-dodecatetraene) and β-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-converted weight average molecular weight (Mw) measured by gel permeation chromatography (GPC) of, for example, more than $1.0 \times 10^3$ and less than $2.0 \times 10^5$. In the present specification, Mw of the liquid diene polymer is a polystyrene conversion value measured by gel permeation chromatography (GPC).

The content of the liquid rubber (the total content of the liquid farnesene-based polymer, the liquid diene-based polymer, etc.) is, for example, more than 1 part by mass and less than 100 parts by mass with respect to 100 parts by mass of the rubber component.

As the liquid rubber, for example, products of Kuraray Co., Ltd. and Clay Valley Co., Ltd., etc. can be used.

(ii-3) Resin Component

The resin component also functions as a tackifier and may be solid or liquid at room temperature. Specific examples of the resin component include rosin-based resin, styrene-based resin, coumarone-based resin, terpene-based resin, C5 resin, C9 resin, C5C9 resin, and acrylic resin, and two or more of them may be used in combination. The content of the resin component is preferably more than 2 parts by mass and less than 45 parts by mass relative to 100 parts by mass of the rubber component. These resin components may be provided with a modified group capable of reacting with silica or the like, as necessary.

Rosin-based resins are resins whose main component is rosin acid obtained by processing pine resin. These rosin resins (rosins) can be classified according to whether they are modified or not, and can be classified into unmodified rosin (non-modified rosin) and modified rosin (rosin derivatives). Examples of unmodified rosins include tall rosin (also known as tall oil rosin), gum rosin, wood rosin, disproportionated rosin, polymerized rosin, hydrogenated rosin, and other chemically modified rosins. Modified rosin is a modification of unmodified rosin, and examples of such modifications include rosin esters, unsaturated carboxylic acid modified rosins, unsaturated carboxylic acid modified rosin esters, rosin amide compounds, and rosin amine salts.

The styrene resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in

addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; and α, β-unsaturated carboxylic acids such as maleic anhydride and acid anhydrides thereof.

As the coumarone-based resin, coumarone-indene resin is preferably used. Coumarone-indene resin is a resin containing coumarone and indene as monomer components constituting the skeleton (main chain) of the resin. Examples of the monomer component contained in the skeleton other than coumarone and indene include styrene, α-methylstyrene, methylindene, and vinyltoluene.

The content of the coumarone-indene resin is, for example, more than 1.0 part by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

The C5 resin refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The C9 resin refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of α-methylstyrene or styrene or a copolymer of α-methylstyrene and styrene is preferable because it is economical, easy to process, and excellent in heat generation. A copolymer of α-methylstyrene and styrene is more preferred. As the aromatic vinyl-based resin, for example, those commercially available from Clayton, Eastman Chemical, etc. can be used.

The C5C9 resin refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA, etc. can be used.

The acrylic resin is not particularly limited, but for example, a solvent-free acrylic resin can be used.

As the solvent-free acrylic resin, a (meth) acrylic resin (polymer) synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present disclosure, (meth) acrylic means methacrylic and acrylic.

Examples of the monomer component constituting the acrylic resin include (meth) acrylic acid, and (meth) acrylic

acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

As the resin component, for example, a product of Maruzen Petrochemical Co., Ltd., Sumitomo Bakelite Co., Ltd., Yasuhara Chemical Co., Ltd., Tosoh Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., ENEOS Corporation, Arakawa Chemical Industry Co., Ltd., Taoka Chemical Industry Co., Ltd. can be used.

(iii) Stearic acid

In the present invention, the rubber composition preferably contains stearic acid. The content of stearic acid is, for example, more than 0.5 parts by mass and less than 10.0 parts by mass per 100 parts by mass of the rubber component. As the stearic acid, a conventionally known product can be used. For example, a product of NOF Corporation, NOF Corporation, Kao Corporation, FUJIFILM Wako Pure Chemical Industries, Ltd., Chiba Fatty Acid Co., Ltd., etc. can be used.

(iv) Anti-aging agents

In the present invention, the rubber composition preferably contains an anti-aging agent. The content of the anti-aging agent is, for example, more than 0.5 parts by mass and less than 10 parts by mass, and more preferably 1 part by mass or more, per 100 parts by mass of the rubber component.

Examples of the antiaging agent include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3-(3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(v) Wax

In the present invention, the rubber composition preferably contains a wax. The content of the wax per 100 parts by mass of the rubber component is, for example, 0.5 to 20 parts by mass, preferably 1.0 to 15 parts by mass, and more preferably 1.5 to 10 parts by mass.

The wax is not particularly limited, and examples thereof include petroleum waxes such as paraffin wax and microcrystalline wax; natural waxes such as vegetable wax and animal wax; synthetic waxes such as polymers of ethylene, propylene, etc. These may be used alone or in combination of two or more kinds.

As the wax, for example, products available from Ouchi Shinko Chemical Industry Co., Ltd., Nippon Seiro Co., Ltd., Seiko Chemical Co., Ltd., etc. can be used.

(vi) Zinc oxide

The rubber composition may contain zinc oxide. The content of zinc oxide is, for example, more than 0.5 parts by mass and less than 10 parts by mass with respect to 100 parts by mass of the rubber component. As the zinc oxide, a conventionally known product can be used, and for example, products of Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used.

(vii) Crosslinking agents and vulcanization accelerators

The rubber composition preferably contains a crosslinking agent such as sulfur. The content of the crosslinking agent is, for example, more than 0.1 parts by mass and less than 10.0 parts by mass per 100 parts by mass of the rubber

component.

Examples of sulfur include powdered sulfur, precipitated sulfur, colloidal sulfur, insoluble sulfur, highly dispersible sulfur, soluble sulfur, etc., which are commonly used in the rubber industry. These may be used alone or in combination of two or more kinds.

As the sulfur, for example, products available from Tsurumi Chemical Industry Co., Ltd., Karuizawa Sulfur Co., Ltd., Shikoku Chemical Industry Co., Ltd., Flexsys Corporation, Nippon Kanryu Kogyo Co., Ltd., Hosoi Chemical Industry Co., Ltd., etc. can be used.

Examples of crosslinking agents other than sulfur include vulcanizing agents containing sulfur atoms, such as Tackirol V200 manufactured by Taoka Chemical Co., Ltd. and KA9188 (1,6-bis (N,N' - dibenzylthiocarbamoyldithio) hexane) manufactured by LANXESS AG, and organic peroxides, such as dicumyl peroxide.

The rubber composition preferably contains a vulcanization accelerator. The content of the vulcanization accelerator per 100 parts by mass of the rubber component is, for example, more than 0.3 parts by mass and less than 10.0 parts by mass.

Examples of the vulcanization accelerator include thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenyl guanidine, di-orthotolyl guanidine, and orthotolyl biguanidine. These may be used alone or in combination of two or more.

(viii) Other

In addition to the above components, the rubber composition may further contain additives commonly used in the tire industry, such as fatty acid metal salts, carboxylate metal salts, organic peroxides, reversion inhibitors, etc., as necessary. The content of these additives is, for example, more than 0.1 parts by mass and less than 200 parts by mass per 100 parts by mass of the rubber component.

(2) Preparation of rubber composition

The rubber composition that forms the cap rubber layer is prepared by appropriately adjusting the various compounding materials described above and using a general method, such as a manufacturing method including a base kneading process in which the rubber component is kneaded with a filler such as carbon black, and a finish kneading process in which the kneaded product obtained in the base kneading process is kneaded with a crosslinking agent.

The kneading can be carried out using a known (internal) kneading machine such as a Banbury mixer, a kneader, or an open roll.

The kneading temperature in the base kneading step is, for example, higher than 50°C and lower than 200°C, and the kneading time is, for example, longer than 30 seconds and shorter than 30 minutes. In the base kneading step, in addition to the above-mentioned components, compounding agents conventionally used in the rubber industry, for example, softeners such as oil, zinc oxide, anti-aging agents, waxes, vulcanization accelerators, etc., may be appropriately added and kneaded as necessary.

In the finish kneading step, the kneaded product obtained in the base kneading step is kneaded with a crosslinking agent. The kneading temperature in the finish kneading step is, for example, higher than room temperature and lower than 80°C, and the kneading time is, for example, longer than 1 minute and shorter than 15 minutes. In the finish kneading step, in addition to the above components, a vulcanization accelerator, zinc oxide, etc. may be appropriately added and kneaded as necessary.

2. Tire manufacturing

The tire according to the present invention can be produced as an unvulcanized tire by molding the rubber composition obtained as described above into a tread rubber of a predetermined shape as a cap rubber layer, and then molding it together with other tire members in a normal manner on a tire building machine.

In the case where the tread portion has a multi-layer structure with a base rubber layer, the rubber composition for forming the base rubber layer can be obtained by kneading the above-mentioned rubber components and compounding materials in the same manner while appropriately changing the compounding amounts. Then, the rubber composition for forming the base rubber layer is extruded together with the cap rubber layer to form a tread rubber of a predetermined shape, and then molded together with other tire members in a normal manner on a tire building machine to produce an unvulcanized tire.

Specifically, on the molded drum, the inner liner as a member to ensure the air-tightness of the tire, the carcass as a member to withstand the load, impact and filling air pressure received by the tire, the belt member as a member to strongly tighten the carcass to increase the rigidity of the tread, and the like are wound, both ends of the carcass are fixed to both side edges, a bead part as a member for fixing the tire to the rim is arranged, and they are formed into a toroid shape. Then the tread is pasted on the center of the outer circumference, and a sidewall is pasted to the radially outer side to form the side portion, thereby producing an unvulcanized tire.

The unvulcanized tire thus produced is then heated and pressurized in a vulcanizer to obtain a tire. The vulcanization step can be carried out by applying a known vulcanization method. The vulcanization temperature is, for example, higher than 120°C and lower than 200°C, and the vulcanization time is, for example, longer than 5 minutes and shorter than 15 minutes.

As described above, the resulting tire enhances the mobility of the polymer, makes it easier to alleviate the shear force generated between the tread portion and the road surface, and provides sufficient reinforcement for the rubber. Also, from a macroscopic perspective, it sufficiently suppresses the occurrence of slippage with the road surface and sufficiently suppresses deterioration of the strength of the rubber. Therefore, these effects work together to sufficiently improve wear resistance during high-speed running.

The tire according to the present invention is not particularly limited in category and can be used as a passenger car tire, a tire for heavy load vehicles such as trucks and buses, a two-wheeled vehicle tire, a run-flat tire, a non-pneumatic tire, etc., but is preferably used as a passenger car tire. Also, it is preferably a pneumatic tire.

[EXAMPLES]

Examples (working examples) that are considered to be preferable for carrying out the present invention are shown below, but the scope of the present invention is not limited to these working examples. In the working examples, a pneumatic tire (tire size 225/45R17, aspect ratio: 45%) manufactured from a composition obtained by varying the formulation according to each table using various chemicals shown below was examined, and the results calculated based on the following evaluation method are shown in Tables 2 and 3.

1. Rubber composition for forming the cap rubber layer

(1) Mixture of ingredients

(a) Rubber component

(i) SBR-1: Modified S-SBR obtained by the method shown in the following (Production Example 1).
(styrene content: 45% by mass, vinyl content: 35% by mass)
(ii) SBR-2: Modified S-SBR obtained by the method shown in the following (Production Example 2).
(styrene content: 25% by mass, vinyl content: 25% by mass)
(iii) SBR-3: HPR840 (S-SBR) manufactured by ENEOS Material Co., Ltd.
(styrene content: 10% by mass, vinyl content: 42% by mass)
(iv) BR: Ubepol BR150B (Hicis BR) manufactured by Ube Industries, Ltd.
(cis content 97% by mass, trans content 2% by mass, vinyl content 1% by mass)
(v) NR: TSR20

(Production Example 1)

The SBR-1 is prepared according to the following procedure. First, cyclohexane, tetrahydrofuran, styrene, and 1,3-butadiene are charged into a nitrogen-substituted autoclave reactor. After adjusting the temperature of the reactor contents to 20°C, n-butyllithium is added to initiate polymerization. Polymerization is carried out under adiabatic conditions, with the maximum temperature being 85°C. When the polymerization conversion rate reaches 99%, butadiene is added, and polymerization is continued for another 5 minutes. Thereafter, methyltrimethoxysilane is added as a modifying agent and the reaction is carried out for 15 minutes. After the polymerization reaction is completed, 2,6-di-tert-butyl-p-cresol is added. Next, the solvent is removed by steam stripping, and the mixture is dried with a heated roll adjusted to 110°C to obtain SBR-1.

(Production Example 2)

The SBR-2 is prepared according to the following procedure. First, two autoclaves with an internal volume of 10 L, an inlet at the bottom and an outlet at the top, and equipped with a stirrer and a jacket are connected in series as reactors, and butadiene, styrene, and cyclohexane are mixed in a predetermined ratio. This mixed solution is passed through a dehydration column filled with activated alumina, mixed with n-butyllithium in a static mixer to remove impurities, and then, continuously fed from the bottom of the first reactor. Furthermore, 2,2-bis(2-oxolanyl)propane as a polar substance and n-butyllithium as a polymerization initiator are continuously fed from the bottom of the first reactor at a predetermined rate, respectively, and the temperature inside the reactor is maintained at 95°C. The polymer solution is continuously withdrawn from the head of the reactor and fed to the second reactor. The temperature of the second reactor is kept at 95°C, and a mixture of tetraglycidyl-1,3-bisaminomethylcyclohexane (monomer) as a modifying agent and an oligomer component is continuously added as a 1000-fold diluted solution of cyclohexane at a predetermined rate to carry out a modification reaction. This polymer solution is continuously withdrawn from the reactor, and an antioxidant is continuously added using a static mixer, and then, the solvent is removed to obtain SBR-2.

The vinyl content (unit: % by mass) of SBR-1 and SBR-2 is determined by infrared spectroscopy from the absorption intensity at about 910 $cm^{-1}$, which is the absorption peak of the vinyl group, and the styrene content (unit: % by mass) is determined from the refractive index in accordance with JIS K6383:1995.

(b) Compounding materials other than rubber components

(i) Silica: Ultrasil VN3 manufactured by Evonik Industries ($N_2SA$: 175 $m^2/g$, average primary particle diameter: 15 nm)
(ii) Carbon black: Diablack N220 manufactured by Mitsubishi Chemical Corporation ($N_2$ SA: 115 $m^2/g$)
(iii) Silane coupling agent: Si69 manufactured by Evonik Industries (Bis(3-triethoxysilylpropyl)tetrasulfide)
(iv) Resin: T-REZ PR801 manufactured by ENEOS Corporation (Hydrogenated aromatic modified alicyclic hydrocarbon resin)
(v) Oil: VIVATEC 500 manufactured by H&R Corporation (TDAE oil)
(vi) Zinc oxide: Zinc oxide type 2 manufactured by Mitsui Mining & Smelting Co., Ltd.
(vii) Anti-aging agent: Antigen 6C manufactured by Sumitomo Chemical Co., Ltd. (N-(1,3-dimethylbutyl)-N'-phenyl-p-phenylene diamine)
(viii) Wax: Sannok N (selected special wax) manufactured by Ouchi Shinko Chemical Industry Co., Ltd.
(ix) Stearic acid: Bead stearic acid "Tsubaki" manufactured by NOF Corporation
(x) Vulcanization accelerator-1: Nocceler CZ manufactured by Ouchi Shinko Chemical Industry Co., Ltd. (N-cyclohexyl-2-benzothiazylsulfenamide (CBS))
(xi) Vulcanization accelerator-2: Nocceler D manufactured by Ouchi Shinko Chemical Industry Co., Ltd. (N,N'-diphenylguanidine (DPG))
(xii) Sulfur: Powdered sulfur manufactured by Karuizawa Sulfur Co., Ltd.

(2) Rubber composition for forming the cap rubber layer

According to the formulation shown in Tables 2 and 3, materials other than sulfur and vulcanization accelerator are kneaded for 5 minutes under the condition of 150°C using a Banbury mixer to obtain a kneaded mixture. The amounts of each compound are in parts by mass.

Next, sulfur and a vulcanization accelerator are added to the kneaded mixture, and the mixture is kneaded for 5 minutes under the condition of 80°C using an open roll to obtain a rubber composition for forming the cap rubber layer.

2. Rubber composition forming the base rubber layer

In parallel, a rubber composition for forming the base rubber layer is obtained based on the formulation shown in Table 1 in the same manner as in the production of the rubber composition for forming the cap rubber layer.

[Table 1]

| Mixture of ingredients | Formulation (parts by weight) |
|---|---|
| NR (TSR20) | 70 |
| BR (UBEPOL-BR150B manufactured by Ube Industries, Ltd.) | 30 |

(continued)

| Mixture of ingredients | Formulation (parts by weight) |
|---|---|
| Carbon black (Cabot Japan Co., Ltd.'s Show Black N330T) | 35 |
| Stearic acid ("Tsubaki" stearic acid, manufactured by NOF Corporation) | 2 |
| Zinc oxide (Zinc oxide No. 1 manufactured by Mitsui Mining & Smelting Co., Ltd.) | 4 |
| Wax (S annok Wax manufactured by Ouchi Shinko Chemical Co., Ltd.) | 2 |
| Anti-aging agent (Nocrac 6C manufactured by Ouchi Shinko Chemical Industry Co., Ltd.) | 3 |
| Anti-aging agent (Antage RD manufactured by Kawaguchi Chemical Industry Co., Ltd.) | 1 |
| Sulfur (powdered sulfur manufactured by Tsurumi Chemical Industry Co., Ltd.) | 1.7 |
| Vulcanization accelerator (Nocceler CZ-G manufactured by Ouchi Shinko Chemical Industry Co., Ltd.) | 1.2 |

3. Pneumatic tires

Each rubber composition is extruded in a predetermined shape so that the (cap rubber layer/base rubber layer) ratio becomes 8:2, to form a tread portion having the thickness shown in Tables 2 and 3.

Thereafter, the tire is pasted together with other tire members to form an unvulcanized tire, and the tire is press-vulcanized for 10 minutes under a condition of 170°C to produce the pneumatic tires (test tires) of Examples 1 to 7 and the pneumatic tires (test tires) of Comparative Examples 1 to 4 shown in Tables 2 and 3.

4. Calculation of parameters

(1) 30°CE*

A rubber test piece for measuring viscoelasticity was prepared by cutting out a piece of rubber of 20 mm length×4 mm width×2 mm thickness from the cap rubber layer of the tread portion of each test tire, with the long side being in the tire circumferential direction. Then, the 30°CE* (MPa) for each rubber test piece was measured using "Eplexor" series manufactured by GABO Corporation under the conditions of a temperature of 30°C, a frequency of 10 Hz, an initial strain of 5%, and a dynamic strain of 1%, in a deformation mode of tensile.

The 30°CE* (MPa) of the base rubber layer was set to 5 MPa.

(2) 30°Ctan δ

A rubber test piece for measuring viscoelasticity was prepared by cutting out a piece of rubber of 20 mm length×4 mm width×2 mm thickness from the cap rubber layer of the tread portion of each test tire, with the long side in the tire circumferential direction. Then, the 30°Ctan δ for each rubber test piece was measured using "Eplexor" series manufactured by GABO under the conditions of temperature 30°C, frequency 10 Hz, initial strain 5%, dynamic strain 1%, and deformation mode: tensile.

The 30°C tan δ of the base rubber layer was set to 0.07.

(3) M100

A No. 7 dumbbell-shaped test piece having a thickness of 1 mm was prepared from a sample taken from the cap rubber layer of each test tire, and a tensile test was carried out at 23°C in accordance with JIS K6251:2010 to measure the modulus at 100% elongation (M100: MPa).

(4) AE

Using a vulcanized rubber test piece prepared by cutting out from the cap rubber layer of the tread portion of each test tire, the AE (% by mass) is determined in accordance with JIS K 6229:2015.

(5) (SBR content × land ratio), (silica content × aspect ratio)

In addition, based on the specifications and compounding contents of each test tire, the product of the content (parts by mass) of SBR having a styrene content of 25 % by mass or less and the land ratio (%) in the tread portion (SBR content × land ratio), and the product of the silica content (parts by mass) and the aspect ratio (%) (silica content × aspect ratio) are calculated.

5. Performance evaluation test (evaluation of wear resistance during high-speed running)

Each test tire is installed to all wheels of a vehicle (a domestic FF vehicle with an displacement of 2000cc), and the tire is filled with air so that the internal pressure is 250 kPa (the standardized internal pressure for a passenger car). After running 8000 km at 100 km/h on a test course, the groove depth of the tread portion is measured and the degree of reduction in groove depth is calculated. The distance traveled corresponding to a 1 mm reduction in groove depth is then calculated.

Next, the result of Comparative Example 4 is set as 100 and indexed according to the following formula to evaluate the wear resistance during high-speed running. A larger value indicates better wear resistance during high-speed running.

$$\text{Wear resistance at high speeds} = [(\text{Test tire results}) / (\text{Comparative example 4 results})] \times 100$$

[Table 2]

| Example No. | Example | | | | | | |
|---|---|---|---|---|---|---|---|
| | 1 | 2 | 3 | 4 | 5 | 6 | 7 |
| Cap rubber layer composition | | | | | | | |
| SBR-1 | - | - | - | - | - | - | - |
| SBR-2 | 85 | 85 | 80 | 85 | 80 | 80 | - |
| SBR-3 | - | - | - | - | - | - | 80 |
| B.R. | 15 | 15 | 15 | 15 | 15 | 15 | 15 |
| N.R. | - | - | 5 | - | 5 | 5 | 5 |
| silica | 98 | 98 | 98 | 98 | 98 | 98 | 98 |
| Carbon Black | 5 | 20 | 20 | 5 | 5 | 5 | 5 |
| Silane Coupling Agent | 7.8 | 7.8 | 7.8 | 7.8 | 7.8 | 7.8 | 7.8 |
| resin | 30 | 30 | 30 | 30 | 30 | 30 | 30 |
| oil | 20 | 28 | 35 | 10 | 20 | 10 | 10 |
| Zinc oxide | 2 | 2 | 2 | 2 | 2 | 2 | 2 |
| Anti-aging agents | 3 | 3 | 3 | 3 | 3 | 3 | 3 |
| wax | 2 | 2 | 2 | 2 | 2 | 2 | 2 |
| Stearic acid | 2 | 2 | 2 | 2 | 2 | 2 | 2 |
| Vulcanization accelerator-1 | 2.0 | 2.0 | 2.0 | 2.0 | 2.0 | 2.0 | 2.0 |
| Vulcanization accelerator-2 | 2.5 | 2.5 | 2.5 | 2.5 | 2.5 | 2.5 | 2.5 |
| sulfur | 1.2 | 1.2 | 1.2 | 1.2 | 1.2 | 1.2 | 1.2 |
| Parameters | | | | | | | |
| Styrene content (% by mass) | 50 | 25 | 25 | 25 | 25 | 25 | 10 |
| 30°CE * (MPa) | 6.8 | 7.6 | 6.8 | 7.4 | 6.8 | 7.5 | 7.3 |

(continued)

| Parameters | | | | | | | |
|---|---|---|---|---|---|---|---|
| Tread thickness (mm) | 8.5 | 8.5 | 8.5 | 8.5 | 8.5 | 8.5 | 8.5 |
| M100 (MPa) | 2.3 | 2.8 | 2.4 | 2.6 | 2.4 | 2.7 | 2.4 |
| 30 °C tan δ | 0.21 | 0.26 | 0.26 | 0.21 | 0.21 | 0.21 | 0.20 |
| AE (% by mass) | 18.1 | 19.4 | 21.3 | 15.1 | 18.1 | 15.1 | 15.1 |
| SBR content × land ratio | 6375 | 6375 | 6000 | 6375 | 6000 | 6000 | 6000 |
| Silica content × flatness | 4410 | 4410 | 4410 | 4410 | 4410 | 4410 | 4410 |
| Performance evaluation | | | | | | | |
| Wear resistance at high speeds | 121 | 135 | 130 | 128 | 125 | 127 | 135 |

[Table 3]

| Comparative Example No. | Comparative Example | | | |
|---|---|---|---|---|
| | 1 | 2 | 3 | 4 |
| Cap rubber layer composition | | | | |
| SBR-1 | 85 | 85 | - | - |
| SBR-2 | - | - | 85 | 85 |
| SBR-3 | - | - | - | - |
| B.R. | 15 | 15 | 15 | 15 |
| N.R. | - | - | - | - |
| silica | 105 | 98 | 110 | 110 |
| Carbon Black | 5 | 5 | 5 | 5 |
| Silane Coupling Agent | 8.4 | 7.8 | 8.8 | 8.8 |
| resin | 20 | 20 | 30 | 40 |
| oil | 35 | 35 | 5 | 15 |
| Zinc oxide | 2 | 2 | 2 | 2 |
| Anti-aging agents | 3 | 3 | 3 | 3 |
| wax | 2 | 2 | 2 | 2 |
| Stearic acid | 2 | 2 | 2 | 2 |
| Vulcanization accelerator-1 | 2.0 | 2.0 | 2.0 | 2.0 |
| Vulcanization accelerator-2 | 2.5 | 2.5 | 2.5 | 2.5 |
| sulfur | 1.2 | 1.2 | 1.2 | 1.2 |
| Parameters | | | | |
| Styrene content (% by mass) | - | - | 25 | 25 |
| 30°CE * (MPa) | 6.5 | 6 | 8.3 | 6.9 |
| Tread thickness (mm) | 8.5 | 8.5 | 8.5 | 8.5 |
| M100 (MPa) | 2.2 | 2.0 | 3.2 | 2.3 |
| 30°C tan δ | 0.25 | 0.22 | 0.22 | 0.22 |
| AE (% by mass) | 19.1 | 19.6 | 12.8 | 18.7 |
| SBR content x land ratio | - | - | 8250 | 8250 |
| Silica content x aspect ratio | 4725 | 4410 | 4950 | 4950 |

(continued)

| Performance evaluation | | | | |
|---|---|---|---|---|
| Wear resistance at high speeds | 91 | 95 | 99 | 100 |

Although the present invention has been described above based on the embodiment, the present invention is not limited to the above embodiment. Various modifications can be made to the above embodiment within the same and equivalent scope of the present invention.

The present invention (1) is

a tire having a tread portion, wherein
a cap rubber layer forming the tread portion contains
a styrene-butadiene rubber (SBR) having a styrene content of 25% by mass or less in an amount of 80 parts by mass or more in 100 parts by mass of the rubber component, and
silica in an amount of 100 parts by mass or less relative to 100 parts by mass of the rubber component; and
is formed from a rubber composition which has the complex elastic modulus being measured at a temperature of 30°C, a frequency of 10 Hz, an initial strain of 5%, a dynamic strain rate of 1%, and a deformation mode of tension (30°C E*) of 8.0 MPa or less; and
the thickness of the tread portion is 9.0 mm or less.

The present invention (2) is the tire according to the present invention (1), wherein the styrene amount in the styrene-butadiene rubber (SBR) is 20 % by mass or less.

The present invention (3) is the tire according to the present invention (1) or (2), wherein the 30°C E* is 7.5 MPa or less.

The present invention (4) is the tire of any combination of the present inventions (1) to (3), wherein the thickness of the tread portion is 8.5 mm or less.

The present invention (5) is the tire of any combination of the present inventions (1) to (4), wherein the rubber composition constituting the cap rubber layer has a loss tangent 30°C tan $\delta$ of 0.25 or less, measured in a deformation mode of tension under conditions of a temperature of 30°C, a frequency of 10 Hz, an initial strain of 5%, and a dynamic strain rate of 1%.

The present invention (6) is the tire according to the present invention (5), wherein the 30°C tan $\delta$ is 0.23 or less.

The present invention (7) is the tire of any combination of the present inventions (1) to (6), wherein the cap rubber layer has a modulus at 100% elongation (M100) at 23°C of 2.5 MPa or more.

The present invention (8) is the tire of any combination of the present inventions (1) to (7), wherein the rubber component of the rubber composition constituting the cap rubber layer contains an isoprene-based rubber.

The present invention (9) is the tire of any combination of the present inventions (1) to (8), wherein the thickness of cap rubber layer occupies 10% or more of the entire tread portion.

The present invention (10) is the tire of any combination of the present inventions (1) to (9), wherein a land ratio in tread portion is 40% or more, and the product of the content (parts by mass) of styrene-butadiene rubber (SBR) having a styrene content of 25 % by mass or less in 100 parts by mass of the rubber component and the land ratio (%) in the tread portion is 9,000 or less.

The present invention (11) is the tire of any combination of the present inventions (1) to (10), wherein a land ratio in the tread portion is 40% or more, and the product of the content (parts by mass) of styrene-butadiene rubber (SBR) having a styrene content of 25 % by mass or less in 100 parts by mass of the rubber component and the land ratio (%) in the tread portion is 8,500 or less.

The present invention (12) is the tire of any combination of the present inventions (1) to (11), wherein a land ratio in the tread portion is 40% or more, and the product of the content (parts by mass) of styrene-butadiene rubber (SBR) having a styrene content of 25 % by mass or less in 100 parts by mass of the rubber component and the land ratio (%) in the tread portion is 7000 or less.

The present invention (13) is the tire of any combination of the present inventions (1) to (12), wherein the aspect ratio is 80% or less, and the product of the content (parts by mass) of the silica relative to 100 parts by mass of the rubber component and the aspect ratio (%) is 7,500 or less.

The present invention (14) is the tire of any combination of the present inventions (1) to (13), wherein the aspect ratio is 80% or less, and the product of the content (parts by mass) of the silica relative to 100 parts by mass of the rubber component and the aspect ratio (%) is 7000 or less.

The present invention (15) is the tire of any combination of the present inventions (1) to (14), wherein the aspect ratio is 80% or less, and the product of the content (parts by mass) of the silica relative to 100 parts by mass of the rubber

component and the aspect ratio (%) is 6,500 or less.

## Claims

1. A tire having a tread portion, wherein

   a cap rubber layer forming the tread portion contains
   a styrene-butadiene rubber (SBR) having a styrene content of 25% by mass or less in an amount of 80 parts by mass or more in 100 parts by mass of the rubber component, and
   silica in an amount of 100 parts by mass or less relative to 100 parts by mass of the rubber component; and
   is formed from a rubber composition which has the complex elastic modulus being measured at a temperature of 30°C, a frequency of 10 Hz, an initial strain of 5%, a dynamic strain rate of 1%, and a deformation mode of tension (30°C E*) of 8.0 MPa or less; and
   the thickness of the tread portion is 9.0 mm or less.

2. The tire according to claim 1, wherein the styrene-butadiene rubber (SBR) contains 20 % by mass or less of styrene.

3. The tire according to claim 1 or 2, wherein the 30°C E* is 7.5 MPa or less.

4. The tire according to any one of claims 1-3, wherein the thickness of the tread portion is 8.5 mm or less.

5. The tire according to any one of claims 1-4, wherein the rubber composition constituting the cap rubber layer has a loss tangent 30°C tan $\delta$ of 0.25 or less, measured in a deformation mode of tension under conditions of a temperature of 30°C, a frequency of 10 Hz, an initial strain of 5%, and a dynamic strain rate of 1%.

6. The tire according to claim 5, wherein the 30°C tan $\delta$ is 0.23 or less.

7. The tire according to any one of claims 1-6, wherein the cap rubber layer has a modulus at 100% elongation (M100) at 23°C of 2.5 MPa or more.

8. The tire according to any one of claims 1-7, wherein the rubber component of the rubber composition constituting the cap rubber layer contains an isoprene-based rubber.

9. The tire according to any one of claims 1-8, wherein the thickness of cap rubber layer occupies 10% or more of the entire tread portion.

10. The tire according to any one of claims 1-9, wherein a land ratio in tread portion is 40% or more, and the product of the content (parts by mass) of styrene-butadiene rubber (SBR) having a styrene content of 25 % by mass or less in 100 parts by mass of the rubber component and the land ratio (%) in the tread portion is 9,000 or less.

11. The tire according to any one of claims 1-10, wherein a land ratio in the tread portion is 40% or more, and the product of the content (parts by mass) of styrene-butadiene rubber (SBR) having a styrene content of 25 % by mass or less in 100 parts by mass of the rubber component and the land ratio (%) in the tread portion is 8,500 or less.

12. The tire according to any one of claims 1-11, wherein a land ratio in the tread portion is 40% or more, and the product of the content (parts by mass) of styrene-butadiene rubber (SBR) having a styrene content of 25 % by mass or less in 100 parts by mass of the rubber component and the land ratio (%) in the tread portion is 7000 or less.

13. The tire according to any one of claims 1-12, wherein the aspect ratio is 80% or less, and the product of the content (parts by mass) of the silica relative to 100 parts by mass of the rubber component and the aspect ratio (%) is 7,500 or less.

14. The tire according to any one of claims 1-13, wherein the aspect ratio is 80% or less, and the product of the content (parts by mass) of the silica relative to 100 parts by mass of the rubber component and the aspect ratio (%) is 7000 or less.

15. The tire according to any one of claims 1-14, wherein the aspect ratio is 80% or less, and the product of the content

(parts by mass) of the silica relative to 100 parts by mass of the rubber component and the aspect ratio (%) is 6,500 or less.

**INTERNATIONAL SEARCH REPORT**

International application No.
**PCT/JP2023/016625**

**A. CLASSIFICATION OF SUBJECT MATTER**

***B60C 11/00***(2006.01)i; ***B60C 1/00***(2006.01)i; ***B60C 3/04***(2006.01)i; ***B60C 11/03***(2006.01)i; ***C08F 236/10***(2006.01)i; ***C08K 3/36***(2006.01)i; ***C08L 9/06***(2006.01)i
FI: B60C11/00 F; B60C1/00 A; B60C11/00 D; B60C11/03 Z; B60C3/04 B; C08K3/36; C08L9/06; C08F236/10

According to International Patent Classification (IPC) or to both national classification and IPC

**B. FIELDS SEARCHED**

Minimum documentation searched (classification system followed by classification symbols)

B60C11/00; B60C1/00; B60C3/04; B60C11/03; C08F236/10; C08K3/36; C08L9/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-172248 A (SUMITOMO RUBBER INDUSTRIES, LTD.) 01 November 2021 (2021-11-01) claims, examples 1-16, fig. 1, 2 | 1-15 |
| A | JP 2021-172228 A (SUMITOMO RUBBER INDUSTRIES, LTD.) 01 November 2021 (2021-11-01) claims, examples 1-7, fig. 1 | 1-15 |
| A | JP 2021-172213 A (SUMITOMO RUBBER INDUSTRIES, LTD.) 01 November 2021 (2021-11-01) claims, examples 1-22, fig. 1, 2 | 1-15 |
| A | JP 2021-88676 A (SUMITOMO RUBBER INDUSTRIES, LTD.) 10 June 2021 (2021-06-10) claims, examples 1-13 | 1-15 |
| A | JP 2021-28400 A (SUMITOMO RUBBER INDUSTRIES, LTD.) 25 February 2021 (2021-02-25) claims, examples | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 July 2023** | **18 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | Telephone No. |

Form PCT/ISA/210 (second sheet) (January 2015)

INTERNATIONAL SEARCH REPORT

International application No.
PCT/JP2023/016625

C. DOCUMENTS CONSIDERED TO BE RELEVANT

| Category* | Citation of document, with indication, where appropriate, of the relevant passages | Relevant to claim No. |
|---|---|---|
| A | JP 2020-125378 A (SUMITOMO RUBBER INDUSTRIES, LTD.) 20 August 2020 (2020-08-20) claims, examples | 1-15 |

Form PCT/ISA/210 (second sheet) (January 2015)

**INTERNATIONAL SEARCH REPORT**
**Information on patent family members**

International application No.
**PCT/JP2023/016625**

| Patent document cited in search report | Publication date (day/month/year) | Patent family member(s) | Publication date (day/month/year) |
|---|---|---|---|
| JP 2021-172248 A | 01 November 2021 | EP 4005822 A1<br>claims, examples 1-16, fig. 1, 2<br>CN 114616275 A<br>WO 2021/220634 A1 | |
| JP 2021-172228 A | 01 November 2021 | (Family: none) | |
| JP 2021-172213 A | 01 November 2021 | EP 4140764 A1<br>claims, examples 1-22, fig. 1, 2<br>CN 115461232 A<br>WO 2021/215279 A1 | |
| JP 2021-88676 A | 10 June 2021 | EP 3831617 A1<br>claims, examples 1-13 | |
| JP 2021-28400 A | 25 February 2021 | (Family: none) | |
| JP 2020-125378 A | 20 August 2020 | US 2022/0098390 A1<br>claims, examples<br>WO 2020/158516 A1<br>EP 3907089 A1<br>CN 113329889 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018135412 A
- JP 2018135500 A
- JP 2019182982 A
- JP 2021088676 A
- JP 2010111753 A
- US 4414370 B
- JP 59006207 A
- JP 5058805 B
- JP 1313522 A
- US 5010166 B